# EUROPEAN PATENT APPLICATION

(11) **EP 1 961 291 A1**
(43) Date of publication of application: **27.08.2008**
(21) Application number: 07252902.7
(22) Date of filing: 23.07.2007
(51) Int. Cl.: A01G 31/00

(54) **Mineral wool growth substrate and its use**

(71) Applicant: Rockwool International A/S, 2640 Hedehusene (DK)
(72) Inventor: Cuypers, Jean Marie Wilhelmus, 6067 CX Linne (NL); de Kubber, Daan L., 6041 XR Roermond (NL)
(74) Representative: Samuels, Lucy Alice

(57) **Abstract**

The invention provides a coherent mineral wool growth substrate consisting of mineral wool and film-forming additive, wherein the top half of the growth substrate contains a first film-forming additive which has a contact angle A with water and the lower half of the growth substrate contains a second film-forming additive which has a contact angle B with water, and contact angle A is lower than contact angle B. Alternatively the substrate comprises a hydrophilic additive which has a critical micelle concentration not more than 5x10⁻³ moles per litre, wherein the concentration of the additive is greater in the top half of the mineral wool growth substrate than in the lower half.

## Description

The invention relates to mineral wool growth substrates and to their use as substrates for horticulture. It also relates to processes for the production of such growth substrates.

It is known to provide growth substrates formed from mineral wool which are provided as a coherent plug, block, slab or mat and these generally include a binder, often an organic binder, in order to provide structural integrity to the product. Such binders are commonly hydrophobic once cured. This allows the growth substrate to retain its structure during water irrigation, including long term use. However, mineral wool products which are to be used as growth substrates must have a capacity to take up and hold water, which is routinely supplied by an irrigation system to the growth substrate, and they must have re-wetting properties. Accordingly, it is also known to include a wetting agent in mineral wool growth substrate products. It is also known to include other additives in such growth substrate products to impart properties such as additional water holding capacity. Examples of this knowledge include GB 1336426, WO 92/04824, EP-A-1226749, DE 4024727, DE 4208733, EP-A-485277 and CA 2301248.

It is also known to provide a binder which has hydrophilic properties, thus removing the need to include a separate wetting agent. It is also known to include more than one type of binder in a single product, to achieve the same effect. An example of this technology is WO 99/38372.

A long standing problem which is constantly under consideration by those working in this field is the question of hydroretentivity at the top of the substrate. Over time, gravity tends to result in water in the substrate collecting primarily in the lower parts of the substrate such that the top section becomes too dry and the lower section becomes too wet.

Various methods of dealing with this problem have been disclosed. An example is US 5009030 which addresses the problem by providing a hydroretentivity gradient in the fibres themselves. This may be brought about by a gradient in the fineness of the fibres such that the average diameter of the fibres increases in the direction of gravity, or a gradient in the density of the fibres.

Another disclosure which addresses this problem is US 5086585, which chooses a particular production method involving longitudinal compression of the felt of mineral fibres prior to binder curing, in order that the final product has a good hydroretentivity at the top.

The present invention addresses the problem of providing a mineral wool growth substrate provided as a coherent product which is capable of giving a desirable water distribution profile in use.

According to a first aspect of the invention we provide a coherent mineral wool growth substrate consisting of mineral wool and film-forming additive, wherein the top half of the growth substrate contains a first film-forming additive which has a contact angle A with water and the lower half of the growth substrate contains a second film-forming additive which has a contact angle B with water, and contact angle A is lower than contact angle B.

The film forming additive in the top half and the film forming additive in the lower half may each be single materials or blends. In the case of a blend, it is the blend which is film-forming and which exhibits the defined contact angle. The film forming additive is the total of additives to the mineral wool, including any binder. If the composition of the film forming additive in the top half varies over that half then the relevant contact angle A is the average over the top half. Similarly, if the contact angle varies over the lower half, then the relevant contact angle B (which must be higher than angle A) is the average over the lower half.

As a result of this structure and the choice of the combination of additives to the mineral wool growth substrate, we find that it is possible to maximise water retention in the top half of the substrate and minimise water retention in the lower half of the substrate. This results in better water distribution over the height of the substrate and better resaturation properties of the growth substrate product.

In a second aspect of the invention we provide a coherent mineral wool growth substrate comprising a hydrophilic additive, wherein the concentration of hydrophilic additive is greater in the top half of the mineral wool growth substrate than in the lower half. In this aspect the hydrophilic additive has a critical micelle concentration (CMC) of not more than 5x10⁻³. Preferably, the hydrophilic additive has a critical micelle concentration of not more than 4x10⁻³; more preferably, not more than 3x10⁻³ moles per litre. We believe that additives having these defined low values of CMC result in reduced leaching of the additive from the growth substrate over time as it is used.

For instance, a particularly preferred hydrophilic additive is a linear alkyl benzene sulphonate having chain length 12 carbon atoms in the alkyl portion. We find that this particular additive, which has CMC of 2x10⁻³ moles per litre., has less than 30% of the amount initially added leached out of the product after tests simulating one year of continuous use.

In this aspect of the invention also we find that the specific choice of this type of additive and its distribution leads to an improved water distribution profile in use.

In the invention, the top half of the growth substrate is the upper 50%, determined when the growth substrate is in its in-use position, and the lower half is correspondingly the lower 50% in-use.

We also provide methods of growing plants comprising positioning at least one plant for growth in a growth substrate according to the first or second aspect of the invention, where the roots of the plant extend down into the lower half of the growth substrate.

The invention also includes processes for making the growth substrates according to the first and second aspects of the invention.

In the invention the mineral wool can be selected from any of the known types of mineral wool for use as growth substrates, such as glass, stone or slag wool. Fibre diameter is often in the range 3 to 20 microns, in particular 5 to 10 microns, as conventional.

The growth substrate is integral and can be in the form of small blocks or plugs, larger blocks, or an extensive mat or slab. Dimensions may be selected as convenient. The growth substrate is generally a matrix of mineral wool fibres, which has been produced as such, but can be formed by granulating a slab of mineral wool and consolidating the granulated material so that it is coherent.

According to the first aspect of the invention the total additive to the mineral wool has a contact angle A in the top half of the substrate which is less than the contact angle B of the total additive in the lower half of the growth substrate.

As mentioned above, the contact angle A is the average contact angle over the entire top half and the contact angle B is the average contact angle over the entire lower half. Preferably the contact angle of the additive in the top quarter of the growth substrate is less at all points in the entire top quarter than the contact angle at any point in the entire lower quarter of the growth substrate.

The relevant additive is the total of all additives included in the mineral wool substrate. That is, the product consists of the mineral wool and the added material or blend of added materials.

Contact angle with water is measured by coating a glass slide with the additive and allowing this to cure and then measuring the contact angle of a drop of water placed on the cured additive film.

Contact angle is measured according to ASTM D724-99 (or according to ASTM D5725-99 if an automated contact angle tester is used).

The additive will normally include a binder added for the purpose of providing structural integrity to the mineral wool product. The additive in the top half of the mineral wool growth substrate often comprises a blend of hydrophobic curable binder and hydrophilic additive such as wetting agent, or a single additive which is a hydrophilic binder.

The lower half often comprises hydrophobic binder and hydrophilic additive such as wetting agent, wherein the concentration of the hydrophilic additive is lower than in the top half. In this case concentration is by weight based on weight of fibres. Alternatively, the lower half may include hydrophilic binder, in a lower concentration than the concentration of hydrophilic binder in the top half.

Wetting agents are normally surfactants and can be non-ionic, anionic or cationic, and non-ionic and anionic surfactants are preferred over cationic.

Suitable wetting agents include anionic surfactants such as salts (including for example, sodium, potassium, ammonium and substituted ammonium salts such as mono-, die- and triethanolamine salts) of the anionic sulphate, sulfonate, carboxylate and sarcosinate surfactants. Other anionic surfactants include isethionates, N-acyl taurates, fatty acid amines of methyl tauride, alkyl succinates and sulfo succinates, mono esters of sulfo succinates, die- esters of sulfo succinates and N-acyl sarcosinates. Preferred are anionic sulphate surfactants and anionic sulphonate surfactants, anionic carboxylate surfactants and anionic soap surfactants.

Particularly preferred are the anionic sulphonate surfactants such as linear or branched alkyl benzene sulphonates, alkyl ester sulphonates primary or secondary alkene sulphonates, olefin sulphonates, sulphonated polycarboxylic acids, alkyl glycerol sulphonates, fatty acyl glycerol sulphonates, fatty oleyl glycerol sulphonates and mixtures thereof.

Most preferably the anionic surfactant is a linear alkyl benzene sulphonate in which the alkyl chain has from 5 to 20 carbon atoms. The sodium and potassium salts are preferred. This type of surfactant provides particularly beneficial water distribution properties for growth substrates, especially if they are of relatively large height. It also provides excellent resaturation properties and does not lead to foaming problems in the irrigation water. This also reduces problems of increase in concentration of wetting agent within closed irrigation systems.

Preferably the alkyl chain length is in the range 8 to 16, and more preferably at least 90% of the chains are in the range 10 to 13 and more preferably at least 90% (by weight) are in the range 10 to 12.

Alternatively, a surfactant may be cationic or zwitterionic. Examples of cationic surfactants include quaternary ammonium surfactants. These can, for instance, be selected from mono C6 to mono C16, preferably C6 to C10 N-alkyl or alkenyl ammonium surfactants wherein the remaining n positions are substituted by groups such as methyl, hydroxyethyl and hydroxypropyl.

Suitable zwitterionic surfactants include derivatives of secondary and tertiary amines, derivatives of heterocyclic secondary and tertiary amines, or derivatives of quaternary ammonium, quaternary phosphonium or tertiary sulphonium compounds. Betaine and sultaine surfactants are examples of zwitterionic surfactants.

In a preferred aspect the growth substrate comprises wetting agent, preferably anionic surfactant, in the top half and substantially no wetting agent in the lower half. In the top half the concentration of surfactant is preferably 0.01 to 3% by weight based on growth substrate, more preferably 0.5 to 1%, in particular 0.075 to 0.5%.

Preferably the amount by weight of surfactant based on the weight of binder (dry matter) is in the range 0.01 to 5%, preferably 0.5 to 4%.

The additive in the first aspect of the invention will normally comprise a material which provides binding capacity and a material which is hydrophilic. These properties may be provided by a single compound or by a blend of two different compounds.

Binding capacity can be provided by an organic hydrophobic binder, such as a conventional heat-curable (thermosetting), hydrophobic binder. Examples include phenol formaldehyde resin or urea formaldehyde resin, in particular phenol urea formaldehyde (PUF) resin.

Alternatively, binding capacity can be provided by means of a hydrophilic binder such as is described in WO 099/38372.

In the top half of the growth substrate the contact angle preferably ranges from 5 to 15°. In the lower half the contact angle B is preferably in the range 20 to 40°.

The difference between contact angles A and B is preferably at least 10°, more preferably at least 15°, often up to 30°.

As mentioned above, the contact angles A and B are expressed as an average of the contact angle over the entire depth of the relevant half, in cases where the composition of the additive varies across that half. In cases where there is variation across a half, preferably the total range of contact angles within the top half is not more than 10°, more preferably not more than 5°. Preferably the total range of contact angles in the lower half is not more than 15°, more preferably not more than 10°.

In the case where hydrophobic binder is used in the mineral wool substrate, preferably the concentration is in the range 0.5 to 5%, preferably 1 to 4%. Preferably the concentration of a hydrophobic binder is similar or the same in both the top and lower halves of the growth substrate product. Preferably the amount of binder in the lower half is from 90 to 110% of the concentration of binder in the top half.

Preferably the variation in contact angle of the total additive is obtained by varying the type and/or concentration of hydrophilic additive. Thus preferably the concentration of hydrophilic additive in the top half is preferably at least 120% of the concentration of hydrophilic additive in the lower half.

In the second aspect of the invention a water immobile additive is provided which is hydrophilic and has a greater concentration in the top half than in the lower half.

In this aspect a material is hydrophilic if it gives a water contact angle (as defined above) below 90°. Preferably it is below 45°.

According to the invention a material is water immobile if it is positioned in contact with water and the surface tension of the water does not substantially change.

The water immobile hydrophilic additive can for instance be a surfactant or a hydrophilic binder.

In the case of a surfactant the preferred amounts of surfactant in the top half are from 1 to 3%. Preferred amounts in the lower half are from 0.5 to 2%. Generally the amount of surfactant in the lower half is less than the amount in the upper half.

Preferably the concentration of the hydrophilic water immobile additive in the top half is at least 120% of the concentration of the hydrophilic water immobile additive in the lower half.

It is possible to include as a hydrophilic additive a hydrophilic binder, which can in that case be the only component of the additive. In this case, the concentration of hydrophilic binder in the top half is greater than the concentration in the lower half, and is preferably at least 120% of the concentration in the lower half.

The growth substrate of the first and second aspects of the invention can be used in a method of growing plants in which the plants are positioned in the mineral wool substrate for growth. One plant, or more than one, may be positioned in a single unit of mineral wool growth substrate. The top half is uppermost in use and normally the base of each plant is in the top half of the growth substrate, with the roots extending downwardly into the lower half.

The increased control in the water distribution in the top half and lower half of the product is particularly important in the rooting-in and root development phases. It also opens up possibilities for varying the height of the substrate when the plant being grown requires more water buffer.

The invention is particularly suitable for methods when the growth substrate has a relatively high overall thickness, such as methods for germination of seedlings, propagation of cuttings, growth of plants in containers, freely planted cultures and sucking beds. The height (thickness) of the growth substrate is often at least 80 mm or at least 100 mm, and often at least 120 or at least 160 mm.

The growth substrate products of the invention can be made in generally conventional manner. That is, they are made by providing solid mineral raw materials, melting these raw materials to form a melt and forming the melt into fibres, collecting the fibres as a primary web and consolidating the collected fibres. A binder is, conventionally, usually added by spraying onto the fibres after formation but before collection and consolidation. In the invention the binder is usually a curable binder and is normally cured as the consolidated product passes through a curing oven. After this the product is cut into the desired sizes.

Curing is normally in an oven at a temperature of around 200°C or greater, often at least 220°C, for instance in the range 220 to 260°C. Examples of curing temperatures are 225, 240 and 250°C.

The fibre production method can be by means of a known cup spinner, whereby melt is allowed to flow into a spinning cup and flung through and from holes in the spinning cup as the cup rotates about a substantially vertical axis. Alternatively, the spinner may be based on rotors which are mounted about a substantially horizontally axis and which have a solid periphery onto which melt is poured and from which it is flung as fibres. A preferred system is a cascade spinner in which there are at least 2, generally at least three and normally 4 horizontally mounted rotors. Melt is flung from the first rotor partially as fibres and partially as melt which hits the second rotor, which converts more melt into fibres and some is flung onto the third rotor, and so on.

In the method, it is necessary to incorporate the additive into the substrate in such a way that the variation in the nature of the additive, as defined in the first and second aspects of the invention, is obtained in the final product. Thus different types and/or amounts of additive are incorporated in such a way that the concentration and/or type of additive is different in the upper half than in the lower half in the end product.

As an example a product can be made as follows. Two cascade spinners each having four horizontally mounted rotors are positioned side by side in a spinning chamber and melt is poured onto the top rotor of each spinner to form fibres which form a single cloud of fibres which are collected on a collecting belt to form a primary fleece. The first spinner forms the fibres of the left side and the second spinner forms the fibres of the right side. The primary fleece can be thought of as formed of two segments, forming the left and right sides of the primary fleece. The primary fleece is crosslapped to form a secondary web such that the left side substantially forms the top half of the secondary web and the right side substantially forms the lower half of the secondary web. Thus, hydrophobic binder can be included in the cloud of fibres emanating from both the first and second spinners so as to be substantially evenly distributed throughout the primary fleece and the secondary web. Additionally, hydrophilic additive can be included in the cloud of fibres emanating from the first spinner and hence only in the left side of the primary fleece (and the top side of the secondary web).

As a further example a product can be made using the cup spinner type of apparatus. Two or more cup spinners are arranged consecutively and produce a fleece which is collected beneath the cup spinners. The first cup spinner forms the fibres of the lower half of the fleece and the second spinner forms the fibres of the upper half of the fleece. It will be seen that an equivalent process using more than one spinner to form the lower half and more than one spinner to form the upper half can also be used.

Hydrophobic binder can be included in the cloud of fibres emanating from all spinners so as to be substantially evenly distributed throughout the fleece. Additionally, hydrophilic additive can be included in the cloud of fibres emanating from the second spinner (or second set of spinners) and hence appears only in the top half of the fleece.

## Claims

1. A coherent mineral wool growth substrate consisting of mineral wool and film-forming additive, wherein the top half of the growth substrate contains a first film-forming additive which has a contact angle A with water and the lower half of the growth substrate contains a second film-forming additive which has a contact angle B with water, and contact angle A is lower than contact angle B.

2. A growth substrate according to claim 1 in which contact angle A is not more than 90°, preferably not more than 60°.

3. A growth substrate according to claim 1 or claim 2 in which the first additive comprises anionic surfactant.

4. A growth substrate according to any preceding claim in which the second additive comprises non ionic surfactant.

5. A growth substrate according to any preceding claim in which the first and second additives each comprise hydrophobic binder in substantially the same concentration by weight based on mineral wool and the first additive additionally comprises hydrophilic material.

6. A coherent mineral wool growth substrate comprising a hydrophilic additive, wherein the concentration of hydrophilic additive is greater in the top half of the mineral wool growth substrate than in the lower half, and wherein the hydrophilic additive has a critical micelle concentration of not more than 5x10⁻³ moles per litre.

7. A growth substrate according to claim 6 in which the hydrophilic water immobile additive is an anionic surfactant.

8. A growth substrate according to claim 6 in which the water immobile hydrophilic additive is a hydrophilic binder.

9. A method of growing plants comprising positioning the base of the plant in a substrate according to any preceding claim, preferably in the top half of the substrate.

10. A method according to claim 9 in which the plant roots extend into the lower half of the substrate.

11. A process of making a growth substrate comprising incorporating into the top half of the product a first additive and incorporating into the lower half a second additive, wherein the first and second additives are chemically different, and wherein the first and second additives are film-forming, and the first additive has a lower contact angle with water than the second additive.

12. A process of making a mineral wool growth substrate comprising incorporating into the top half of the substrate a hydrophilic additive and incorporating into the lower half of the growth substrate the same hydrophilic additive in a lower concentration, and wherein the hydrophilic additive has a critical micelle concentration of not more than 5x10⁻³ moles per litre.

13. A process according to claim 11 or claim 12 in which the top half of the product is formed from a fleece produced by collecting on a collector a cloud of fibres from a first spinning apparatus or set of spinning apparatuses and the lower half of the product is produced from a fleece formed by collecting on a conveyor a cloud of fibres formed by the second spinning apparatus or set of spinning apparatuses.

14. A process according to claim 13 in which the spinning apparatuses are cascade spinners and are positioned side by side in a spinning chamber.

15. A process according to claim 13 in which the spinners are spinning cup apparatuses and are positioned consecutively.
